# EUROPEAN PATENT SPECIFICATION

(11) **EP 1 898 183 B1**
(45) Date of publication and mention of the grant of the patent: **02.12.2009**
(21) Application number: 06015713.8
(22) Date of filing: 27.07.2006
(51) Int. Cl.: G01C 21/34

(54) **Navigation apparatus and method**
Navigationsgerät und -Verfahren
Appareil et procédé de navigation

(43) Date of publication of application: 12.03.2008
(73) Proprietor: Aisin AW Co., Ltd., Fujii-cho Anjo-shi, Aichi 444-1192 (JP)
(72) Inventor: Kashalkar, Sanjay, 85716 Unterschleissheim (DE)
(74) Representative: Kramer - Barske - Schmidtchen

(56) References cited:
- EP-A1- 1 241 650
- JP-A- 2002 243 471

## Description

The present invention relates to a navigation apparatus and to a navigation method for providing guidance to a vehicle user.

A navigation apparatus for providing guidance to a vehicle user is known, where the user inputs a final destination and the navigation apparatus, after calculating a route to the final destination, outputs guidance information guiding the vehicle user to the final destination.

Furthermore, it is known from JP 11-257979 A, that the apparatus retrieves parking lot information on parking lots near the final destination, and chooses a parking lot according to conditions input by the user such as the cheapest parking lot.

JP 2002-243471 discloses an onboard navigation system in which at least one parking space in the neighborhood of the destination is searched.

Furthermore, it is known from JP 2006-58026 A, that a navigation apparatus judges that, after the vehicle reached the final destination but continued to move around for some time, the navigation guidance to the final destination is restarted.

It is an object of the present invention, to provide an improved navigation apparatus and an improved navigation method.

This object is achieved by a navigation apparatus according to claim 1 and a method according to claim 6, respectively.

Further developments of the invention are indicated in the dependent claims.

The navigation apparatus provides an improved user friendly concept in situations, where the user of a navigation apparatus wants to go to a specific address in an area unfamiliar to the user.

With the previous navigation apparatus, there are basically two options for inputting a final destination, namely
a) the user must enter the specific address of the final destination, or
b) the user must enter a specific parking lot somewhere near the specific address or use the option that the navigation apparatus selects a parking lot near the specific address.

With the present navigation apparatus, the vehicle user will be guided to the final destination, and the navigation apparatus will determine that the vehicle entered a first threshold area around the target destination. If the user is able to find road side parking or another parking lot close to the specific address, the vehicle will be parked before the parking notification output condition is fulfilled.

If, however, the user did not find free road side parking or a specific parking lot near the final destination before the parking notification output condition such as a specific time period or a specific driving distance is fulfilled, the navigation system will output parking notification information, optionally on request only, guiding the vehicle user to a parking lot near the final destination.

Accordingly, the user is not forced to select one of above described options a) and b), but the user may first enter the target destination similar to above a) and search for free road side parking or a parking lot near the target destination, and if the user fails to park the car, has the option to obtain guidance to a parking lot near the final destination.

Further features and advantages will become apparent from the following description of embodiments referring to the combining figures. The figures show:
- Fig. 1: a block diagram of a navigation apparatus according to an embodiment of the present invention;
- Fig. 2: a flow chart of a navigation method according to an embodiment of the present invention; and
- Fig. 3: a map displaying a typical travelling path of a vehicle around a final destination.

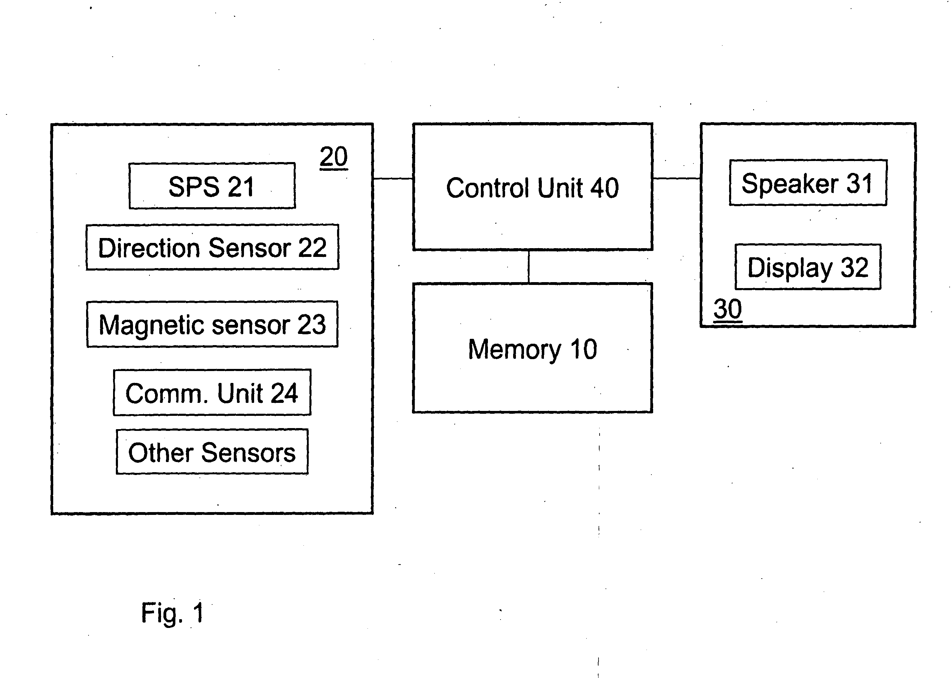

Fig. 1 shows a navigation apparatus according to an embodiment of the present invention. The navigation apparatus comprises a memory 10 for storing map/road data including information on parking lots, a sensor unit 20 including a satellite positioning system (SPS) unit 21 such as a GPS receiver, a direction sensor 22, a magnetic sensor 23, a communication unit 24 such as a cellular telephone unit and/or other sensors, an output unit 20 comprising a speaker 31 for audio output and/or a display 32 for visual output of a guidance information, and a control unit 40 connected to the member unit 10, the sensor unit 20 and the output unit 30 and adapted to control a navigation apparatus and to process the information provided/stored in the other units. Other usual units of navigation apparatus such as an input unit for input of information by a user (e.g. a touch screen, a keyboard, etc.) and the like are not shown in Fig. 1 for the sake of brevity.

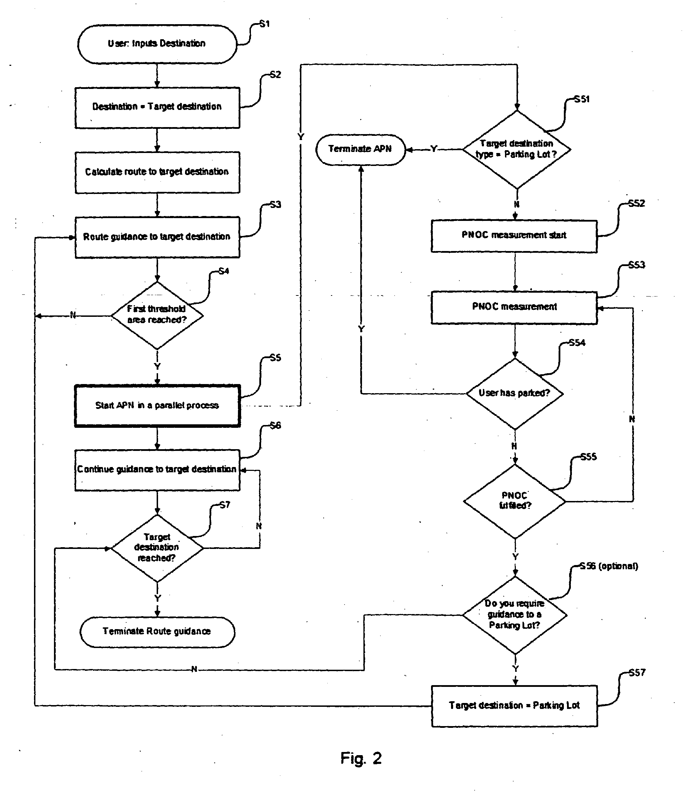

Fig. 2 shows a flowchart of an embodiment of a navigation method, which can be implemented with the apparatus shown in Fig. 1. In step S 1, the vehicle user inputs a destination to which the vehicle should be guided. In step S2, the destination input by the user is set as the target destination. A route from the present vehicle position to the target destination is calculated.

In step S3 the route guidance to the destination is performed, i.e. guidance information is output to the user.

Depending on the type of the target destination, a first threshold area around the target destination is determined. If the target destination is a specific address such as Nymphenburger Strasse 53, the first threshold area will be set relatively small, such as a circle of 300m around the target destination. The first threshold area can be of a form other than a circle. For example, if each road, approaching the destination is marked at 300m driving distance from the destination, then the line joining these marks will not be a circle.

If, on the other hand, the target destination is a target, which covers a relatively large area, such as the main station in Munich, the first threshold area around the target's destination will be set relatively large, such as a circle radius of 600m around the target destination. Additionally, the system determines a second threshold area around the target destination, which is usually relatively small and is used to determine, whether the vehicle.has reached the target destination. In case of a specific address, the second threshold area usually has a radius in the range of 10 to 30m.

In step S4, it is determined whether the first threshold area is reached or not. If the first threshold area was not yet reached (N in S4), the process flow returns to step S3 and continues the route guidance. If the first threshold area has been reached, i.e. if the vehicle entered the first threshold area, the process flow continues in step S5 with starting an automatic parking notification (APN) process in step S5 (Y in S4).

After start of the automatic parking notification process as a separate process (steps S51 to S57), the process flow continues to step S6, where the guidance to the target destination is continued. That means, the APN process operates in the background. In step S7, it is determined whether the target destination has been reached, e.g. by using a second threshold area. If the target destination has not been reached (N in S7), the process flow returns to step S6 to continue the guidance to the target destination. In case the target destination has been reached (Y in S7), the normal route guidance is terminated.

Whether the route guidance was terminated or continued, i.e. independent of the result of the termination in step S7, the APN process started in step S5 continues to be run in parallel (in the background).

In the APN process, it is first determined whether the type of the target destination is a parking lot. If so (Y in step S51), the APN process is terminated.

Otherwise (N in step S51), measurement of a parking notification output condition explained in detail below, is started in step S52.

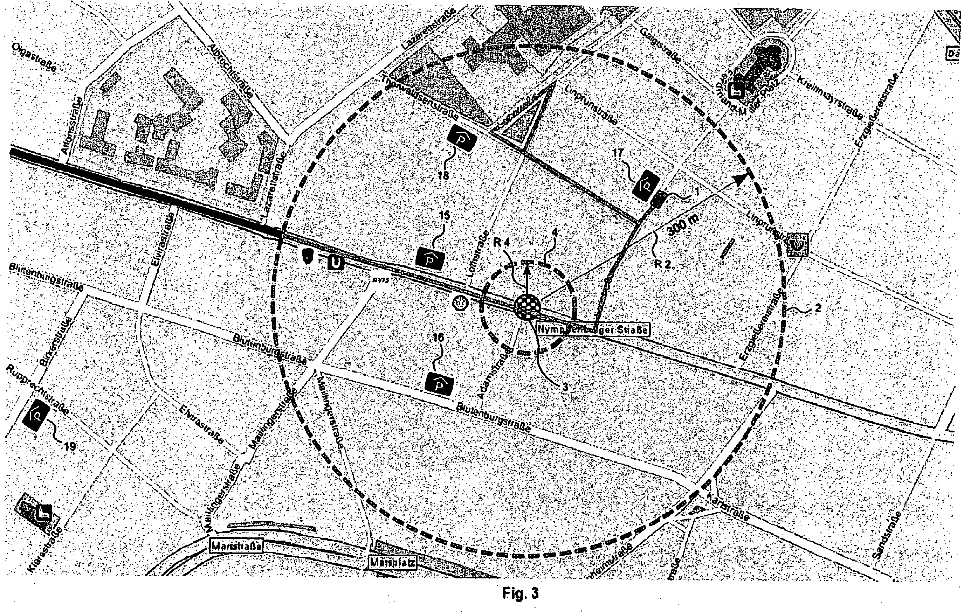

In order to explain the parking notification output condition (PNOC), it is referred to Fig. 3. In Fig. 3, the route of the vehicle before entering the first threshold area 2 is shown with a dark black line (coming from the left upper side in Fig. 3). When the vehicle has entered the first threshold area (Y in step S4), the vehicle continues to go on the route to the target destination 3, in Fig. 3 the specific address Nymphenburger Strasse 53. The route of the vehicle after entering the first threshold area is shown as a grey line in Fig. 3. In the situation shown in Fig. 3, the vehicle continues on Nymphenburger Strasse and enters the second threshold area 4 with a radius R4 of 30m. After the car entered the second threshold area 4, the route guidance is terminated (Y in step S7). Now, the user starts to look for roadside parking and turns left at the next possibility and, in a typical manner, drives through the streets around the target destination in order to find a roadside parking possibility.

The PNOC may be a specific distance travelled by the vehicle after entering the first threshold area such as 1500m travel distance (any value in a range from 100m to 5000m can be determined) and/or a specific time lapsed after entering the second threshold area such as 5min (any time from 10s to 10min can be determined) and/or a certain number (1, 2, 3, ...) of entering and exiting the second threshold area 4 (which means that the vehicle user passes the target destination again without finding a parking place) or any other condition for determining, that the user did not succeed in finding a parking place within the reasonable time, distance or the like.

In step S53, the PNOC is measured.

In step S54, it is determined whether the vehicle has been parked. The determination, whether the vehicle has been parked, can be made by specific conditions such as engine switched off, no movement for more than 2min, or the like.

If it is determined, that the vehicle is not yet parked (N in step S54), it is determined in step S55, whether the PNOC has been fulfilled. If the PNOC has not been fulfilled (N in step S55), the APN returns to step S53.

If, on the other hand, it has been determined in step S54, that the user has parked the vehicle (Y in step S54), the APN is terminated.

If it is determined in step S55, that the PNOC has been fulfilled (Y in step S55), the process flow continues to step S57. In step S57, a parking lot such as a parking house close to the target 3 is determined. This parking lot can be determined based on a specific condition such as distance, costs, or the like. These conditions may be preset by the user or by the system. In the situation shown in Fig. 3, the user has set the closest parking lot, but parking lots 15 and 16, which are closer to the target destination 3 than parking lot 17, are full, which has been communicated to the navigation system via communication unit 24.

Therefore, the closest non-occupied parking lot 17 is selected, and set as the target destination. Then the process flow continues in step S3, where the route to the (new) target destination is calculated and the route guidance to the target destination is output.

Although not shown in Fig. 3, steps 4 and 5 are skipped, e.g. by use of an APN flag.

The process flow continues in step S6 with outputting guidance to the target destination, which is parking lot 17. After the vehicle 1 reaches the target destination, as shown in Fig. 3, it is determined in step S7 that the target destination has been reached and the route guidance is terminated (again).

Optionally, the method includes step S56, which prompts the user to make an input, whether guidance to a parking lot is requested. If the user wishes guidance to a parking lot (Y in optional step S56), the process continues to step S57. Otherwise (N in step S56), the process continues in step S7, if the route guidance was not yet terminated. Optionally, a restart of the route guidance as taught in JP 2006-58026 A is possible.

In an alternative embodiment, the apparatus and method do not use a second threshold area, but the route guidance is stopped when the vehicle enters the first threshold area. This option is feasible, when target destination is a specific address and the radius R2 of the first threshold area is set to be rather small.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus for providing guidance to a vehicle user, comprising
a memory (10) adapted for storing map/road data including information on parking lots (15, 16, 17, 18, 19),
a sensor unit (20) adapted for providing position information on a position of a vehicle (1),
an output unit (30) adapted for outputting guidance information to the vehicle user, and
a control unit (40) adapted for processing the position information and the map/road data to generate guidance information and to control the apparatus,
the control unit being further adapted
- to make a first determination whether the vehicle (1) entered a first threshold area (2) around a target destination (3),
- to make, in response to the first determination, a second determination that the vehicle (1) has not been parked before a parking notification output condition is fulfilled, and
- to control the output unit (30) to output parking notification information in response to the sec- - ond determination.

2. The apparatus of claim 1, wherein
the control unit (40) is adapted to start an automatic parking notification process in response to the first determination, and to make the second determination as part of the automatic parking notification process.

3. The apparatus of claim 2, wherein
the control unit (40) is adapted to provide the normal guidance until the parking notification out-put condition is fulfilled.

4. The apparatus of one of claims 1 to 3, wherein
the control unit (40) is adapted to make a third determination whether the vehicle (1) entered a second threshold area (4) around the target destination (3), the second threshold area (4) being smaller than the first threshold area (2).

5. The apparatus of one of claims 1 to 4, wherein
the parking notification output condition is a lapse of a time period after the vehicle (1) entered the first threshold area (2), and/or a travelling of a predetermined distance after the vehicle (1) entered the first threshold area (2), and/or a predetermined number of entering and exiting of a second threshold area (4) around the target destination (3), the second threshold area (4) being smaller than the first threshold area (2) and/or the entering of the first threshold area (2), if the first threshold area is smaller than a predetermined value.

6. A navigation method for providing guidance to a vehicle user, comprising:
obtaining map/road data including information on parking lots (15, 16,17, 18, 19);
obtaining position information on the position of a vehicle (1);
processing the position information and the map/road data to generate guidance information; making a first determination whether the vehicle (1) entered a first threshold area (2) around a target destination (3);
making, in response to the first determination, a second determination that the vehicle (I) has not been parked before a parking notification output condition is fulfilled; and
outputting parking notification information in response to the second determination.

7. The method of claim 6, comprising
starting an automatic parking notification process in response to the first determination and making the second determination as part of the automatic parking notification process, and
providing normal guidance until the parking notification output condition is fulfilled.

8. The method of claim 6 or 7, comprising
making a third determination whether the vehicle (1) entered a second threshold area (4) around a target destination (3), the second threshold area (4) being smaller than the first threshold area (2).

9. The method of one of claims 6 to 8, wherein
the parking notification output condition is a lapse of a time period after the vehicle (1) entered the first threshold area (2), and/or a travelling of a predetermined distance after the vehicle (1) entered the first threshold area (2), and/or a predetermined number of entering and exiting of a second threshold area (4) around the target destination (3), the second threshold area (4) being smaller than the first threshold area (2) and/or the entering of the first threshold area (2), if the first threshold area is smaller than a predetermined value.

10. A computer program comprising program code which, when run on a correspondingly programmed computer, implements the steps of a method according to one of claims 6 to 9.

## Patentansprüche

1. Navigationsvorrichtung zum Bereitstellen von Führung für einen Fahrzeugbenutzer, mit einem Speicher (10), der angepasst ist zum Speichern von Karten-/Straßendaten, die Information über Parkplätze (15, 16, 17, 18, 19) enthalten,
einer Sensoreinheit (20), die angepasst ist zum Bereitstellen von Positionsinformation über eine Position eines Fahrzeugs (1),
einer Ausgabeeinheit (30), die angepasst ist zum Ausgeben von Führungsinformation an den Fahrzeugbenutzer, und
einer Steuereinheit (40), die angepasst ist zum Verarbeiten der Positionsinformation und der Karten-/Straßendaten zum Erzeugen von Führungsinformation und zum Steuern der Vorrichtung,
wobei die Steuereinheit weiter angepasst ist
- zum Durchführen einer ersten Bestimmung, ob das Fahrzeug (1) in ein erstes Grenzgebiet (2) um einen Zielbestimmungsort (3) eingefahren ist,
- zum Durchführen, als Reaktion auf die erste Bestimmung, einer zweiten Bestimmung, dass das Fahrzeug (1) nicht geparkt wurde, bevor eine Parkankündigungsausgabebedingung erfüllt ist, und
- zum Steuern der Ausgabeeinheit (30) zur Ausgabe von Parkankündigungsinformation als Reaktion auf die zweite Bestimmung.

2. Vorrichtung nach Anspruch 1, bei der
die Steuereinheit (40) angepasst ist zum Starten eines automatischen Parkankündigungsvorgangs als Reaktion auf die erste Bestimmung und zum Durchführen der zweiten Bestimmung als Teil des automatischen Parkankündigungsvorgangs.

3. Vorrichtung nach Anspruch 2, bei der
die Steuereinheit (40) angepasst ist zum Bereitstellen der normalen Führung, bis die Parkankündigungsausgabebedingung erfüllt ist.

4. Vorrichtung von einem der Ansprüche 1 bis 3, bei der
die Steuereinheit (40) angepasst ist zum Durchführen einer dritten Bestimmung, ob das Fahrzeug (1) in ein zweites Grenzgebiet (4) um den Zielbestimmungsort (3) eingefahren ist, wobei das zweite Grenzgebiet (4) kleiner als das erste Grenzgebiet (2) ist.

5. Vorrichtung nach einem der Ansprüche 1 bis 4, bei der
die Parkankündigungsausgabebedingung ein Ablauf einer Zeitspanne, nachdem das Fahrzeug (1) in das erste Grenzgebiet (2) eingefahren ist, und/oder ein Zurücklegen einer vorbestimmten Entfernung, nachdem das Fahrzeug (1) in das erste Grenzgebiet (2) eingefahren ist, und/oder eine vorbestimmte Anzahl des Einfahrens in und Ausfahrens aus einem zweiten Grenzgebiet (4) um den Zielbestimmungsort (3), wobei das zweite Grenzgebiet (4) kleiner als das erste Grenzgebiet (2) ist, und/oder das Einfahren in das erste Grenzgebiet (2), falls das erste Grenzgebiet kleiner als ein vorbestimmter Wert ist, ist.

6. Navigationsverfahren zum Bereitstellen von Führung für einen Fahrzeugbenutzer, mit: Erhalten von Karten-/Straßendaten, die Information über Parkplätze (15, 16, 17, 18, 19) enthalten;
Erhalten von Positionsinformation über die Position eines Fahrzeugs (1);
Verarbeiten der Positionsinformation und der Karten-/Straßendaten zum Erzeugen von Führungsinformation;
Durchführen einer ersten Bestimmung, ob das Fahrzeug (1) in ein erstes Grenzgebiet (2) um einen Zielbestimmungsort (3) eingefahren ist;
Durchführen, als Reaktion auf die erste Bestimmung, einer zweiten Bestimmung, dass das Fahrzeug (1) nicht geparkt wurde, bevor eine Parkankündigungsausgabebedingung erfüllt ist; und
Ausgeben von Parkankündigungsinformation als Reaktion auf die zweite Bestimmung.

7. Verfahren nach Anspruch 6, mit
Starten eines automatischen Parkankündigungsvorgangs als Reaktion auf die erste Bestimmung und Durchführen der zweiten Bestimmung als Teil des automatischen Parkankündigungsvorgangs und Bereitstellen der normalen Führung, bis die Parkankündigungsausgabebedingung erfüllt ist.

8. Verfahren nach Anspruch 6 oder 7, mit
Durchführen einer dritten Bestimmung, ob das Fahrzeug (1) in ein zweites Grenzgebiet (4) um einen Zielbestimmungsort (3) eingefahren ist, wobei das zweite Grenzgebiet (4) kleiner als das erste Grenzgebiet (2) ist.

9. Verfahren nach einem der Ansprüche 6 bis 8, bei dem
die Parkankündigungsausgabebedingung ein Ablauf einer Zeitspanne, nachdem das Fahrzeug (1) in das erste Grenzgebiet (2) eingefahren ist, und/oder ein Zurücklegen einer vorbestimmten Entfernung, nachdem das Fahrzeug (1) in das erste Grenzgebiet (2) eingefahren ist, und/oder eine vorbestimmte Anzahl des Einfahrens in und Ausfahrens aus einem zweiten Grenzgebiet (4) um den Zielbestimmungsort (3), wobei das zweite Grenzgebiet (4) kleiner als das erste Grenzgebiet (2) ist, und/oder das Einfahren in das erste Grenzgebiet (2), falls das erste Grenzgebiet kleiner als ein vorbestimmter Wert ist, ist.

10. Computerprogramm, das Programmcode aufweist, der, wenn er auf einem entsprechend programmierten Computer ausgeführt wird, die Schritte eines Verfahrens nach einem der Ansprüche 6 bis 9 implementiert.

## Revendications

1. Appareil de navigation destiné à fournir un guidage à un utilisateur de véhicule, comprenant une mémoire (10) apte à stocker des données de cartes / routières comportant des informations connexes à des parcs de stationnement (15, 16, 17, 18, 19) ;
une unité de capteur (20) apte à fournir des informations de positionnement concernant un positionnement d'un véhicule (1),
une unité de sortie (30) apte à générer en sortie des informations de guidage transmises à l'utilisateur de véhicule ; et
une unité de commande (40) apte à traiter les informations de positionnement et les données de cartes / routières en vue de générer des informations de guidage et de commander l'appareil,
l'unité de commande étant en outre apte :
- à exécuter une première détermination indiquant si le véhicule (1) est entré dans une première zone limite (2) autour d'une destination cible (3),
- à exécuter, en réponse à la première détermination, une deuxième détermination indiquant que le véhicule (1) n'a pas été stationné avant qu'un état de sortie de notification de stationnement n'ait été satisfait, et
- à commander l'unité de sortie (30) en vue de générer en sortie des informations de notification de stationnement en réponse à la deuxième détermination.

2. Appareil selon la revendication 1, dans lequel
l'unité de commande (40) est apte à initier un processus de notification de stationnement automatique en réponse à la première détermination, et à exécuter la deuxième détermination dans le cadre du processus de notification de stationnement automatique.

3. Appareil selon la revendication 2, dans lequel
l'unité de commande (40) est apte à délivrer le guidage conventionnel jusqu'à ce que l'état de sortie de notification de stationnement soit satisfait.

4. Appareil selon l'une quelconque des revendications 1 à 3, dans lequel
l'unité de commande (40) est apte à exécuter une troisième détermination indiquant si le véhicule (1) est entré dans une seconde zone limite (4) autour d'une destination cible (3), la seconde zone limite (4) étant plut petite que la première zone limite (2).

5. Appareil selon l'une quelconque des revendications 1 à 4, dans lequel
l'état de sortie de notification de stationnement représente un intervalle d'une période de temps suite à l'entrée du véhicule (1) dans la première zone limite (2), et/ou le parcours d'une distance prédéterminée suite à l'entrée du véhicule (1) dans la première zone limite (2), et/ou un nombre prédéterminé d'entrées et de sorties d'une seconde zone limite (4) autour de la destination cible (3), la seconde zone limite (4) étant plus petite que la première zone limite (2) et/ou que l'entrée de la première zone limite (2), lorsque la première zone limite est inférieure à une valeur prédéterminée.

6. Procédé de navigation destiné à fournir un guidage à un utilisateur de véhicule, le procédé comprenant les étapes ci-après consistant à :
obtenir des données de cartes / routières comportant des informations relatives à des parcs de stationnement (15, 16, 17, 18, 19) ;
obtenir des informations de positionnement relatives au positionnement d'un véhicule (1) ;
traiter les informations de positionnement et les données de cartes / routières en vue de générer des informations de guidage ;
exécuter une première détermination indiquant si le véhicule (1) est entré dans une première zone limite (2) autour d'une destination cible (3) ;
exécuter, en réponse à la première détermination, une deuxième détermination indiquant que le véhicule (1) n'a pas été stationné avant qu'un état de sortie de notification de stationnement n'ait été satisfait ; et
générer en sortie des informations de notification de stationnement en réponse à la deuxième détermination.

7. Procédé selon la revendication 6, lequel comporte les étapes ci-dessous consistant à initier un processus de notification de stationnement automatique en réponse à la première détermination, et exécuter la deuxième détermination dans le cadre du processus de notification de stationnement automatique, et délivrer un guidage conventionnel jusqu'à ce que l'état de sortie de notification de stationnement soit satisfait.

8. Procédé selon la revendication 6 ou 7, lequel comporte l'étape ci-dessous consistant à exécuter une troisième détermination indiquant si le véhicule (1) est entré dans une seconde zone limite (4) autour d'une destination cible (3), la seconde zone limite (4) étant inférieure à la première zone limite (2).

9. Procédé selon l'une quelconque des revendications 6 à 8, dans lequel
l'état de sortie de notification de stationnement représente un intervalle d'une période de temps suite à l'entrée du véhicule (1) dans la première zone limite (2), et/ou le parcours d'une distance prédéterminée suite à l'entrée du véhicule (1) dans la première zone limite (2), et/ou un nombre prédéterminé d'entrées et de sorties d'une seconde zone limite (4) autour de la destination cible (3), la seconde zone limite (4) étant plus petite que la première zone limite (2) et/ou que l'entrée de la première zone limite (2), lorsque la première zone limite est inférieure à une valeur prédéterminée.

10. Programme informatique comprenant un code de programme, lequel, lorsqu'il est exécuté sur un ordinateur programmé en conséquence, met en oeuvre les étapes d'un procédé selon l'une quelconque des revendications 6 à 9.
